# EUROPEAN PATENT SPECIFICATION

(11) **EP 3 244 168 B1**
(45) Date of publication and mention of the grant of the patent: **14.08.2019**
(21) Application number: 16168812.2
(22) Date of filing: 09.05.2016
(51) Int. Cl.: G01D 5/26, G01D 5/245, G01D 5/347

(54) **INSTRUMENTED LINEAR MOTION DEVICE WITH A PHOTOLUMINESCENT OPTICAL FIBRE AND A PHOTOSENSITIVE SENSOR**
INSTRUMENTIERTE LINEARBEWEGUNGSVORRICHTUNG MIT FOTOLUMINESZENTER OPTISCHER FASER UND EINEM FOTOSENSITIVEN SENSOR
DISPOSITIF À MOUVEMENT LINÉAIRE INSTRUMENTÉ AVEC UNE FIBRE OPTIQUE PHOTOLUMINESCENTE ET UN CAPTEUR PHOTOSENSIBLE

(43) Date of publication of application: 15.11.2017
(73) Proprietor: NTN-SNR Roulements, 74010 Annecy (FR); SNR Wälzlager GmbH, 33719 Bielefeld (DE)
(72) Inventor: Lindemann, Ralf, 32429 Minden (DE); Mathieu, Jérôme, 74960 Cran-Gevrier (FR)
(74) Representative: Broydé, Marc

(56) References cited:
- EP-A1- 2 927 647
- WO-A1-2015/150708
- US-A- 4 722 607
- US-A- 5 301 251

## Description

### TECHNICAL FIELD OF THE INVENTION

The present invention relates to an instrumented linear motion device provided with a photoluminescent fibre and a photosensitive sensor.

### BACKGROUND ART

An instrumented linear motion device provided with a photoluminescent optical fibre and a photosensitive sensor is disclosed in WO 2015/150708. The instrumented linear motion device comprises a guide rail provided with a guideway for guiding a carriage along a linear path a linear groove extending along the guideway. A photoluminescent optical fibre is received in the groove, and a photosensitive sensor faces an end of the photoluminescent optical fibre. A carriage is guided by the guideway along a linear path. The carriage is provided with a light source for transversally illuminating the photoluminescent optical fibre. The light source emits digital signals which excite transversally the photoluminescent optical fibre. In response to the excitation, the photoluminescent optical fibre emits a secondary digital light signal which is guided in the photoluminescent optical fibre and reaches the photosensitive sensor at the end of the photoluminescent optical fibre. The connection between the photoluminescent optical fibre and the photosensitive sensor is a weak point in the installation. In practice, the photoluminescent optical fibre is breakable and can easily be cut. A bending radius has to be observed. Harness shortening requires specific optical tools, like a polishing tool. The precise positioning of the photosensitive sensor at the end of the photoluminescent optical fibre is difficult to obtain.

In US 6,965,709 optical couplers are used to connect the two ends of a fluorescent optical fibre with photodetectors, with similar problems.

### SUMMARY OF THE INVENTION

The invention aims to provide an instrumented linear motion device provided with a photoluminescent optical fibre and a photosensitive sensor, which overcomes at least some of the interface problems of the prior art.

According to the invention, there is provided an instrumented linear motion device comprising a guide rail defining a main axis of the instrumented linear motion device, the guide rail having an end portion comprising an axial end of the guide rail, the guide rail being provided with a guideway for guiding a carriage along a linear path parallel to the main axis, the guide rail being provided with a linear groove parallel to the main axis, the instrumented linear motion device further comprising a photoluminescent optical fibre received in the linear groove, the photoluminescent optical fibre having an end and a photosensitive sensor facing the end of the photoluminescent optical fibre. The linear groove has an open end opened at the axial end of the guide rail and the instrumented linear motion device further comprises a sensor housing fixed to the end portion of the guide rail in a releasable manner by means of housing securing means, the photosensitive sensor being received within a sensor cavity of the sensor housing.

Because the sensor housing is directly fixed, in a releasable manner, to the end portion of the guide rail, a coherent rigid structure is achieved, which limits the risks of damaging the optical fibre or its connection with the photosensitive sensor.

According to a preferred embodiment, the end portion of the guide rail is received in an insertion cavity of the sensor housing. Preferably, the end portion of the guide rail bears axially against a wall of the opening and/or laterally against a side wall of the opening.

According to an embodiment, the sensor housing has an access opening extending at an angle or perpendicularly to the main axis for inserting the photosensitive sensor in the sensor cavity. This access opening provides an easy access to the sensor even when the sensor housing is fixed to the end portion of the guide rail.

According to an embodiment, the instrumented linear motion device is further provided with sensor securing means for releasably securing the photosensitive sensor relative to the sensor housing or to the guide rail. Preferably, the sensor securing means comprise a set element, preferably a set screw extending through a threaded set hole of the sensor housing, the set element pushing a sensor body of the photosensitive sensor towards the end of the photoluminescent optical fibre. Before it is fixed in the secured position by the sensor securing means, the sensor is preferably movable within the cavity, at least in a direction or a plane perpendicular to the main axis, to fine-tune the alignment between by the photosensitive sensor and the photoluminescent optical fibre. According to one embodiment, the set screw extends in a direction parallel to the main axis and pushes the sensor body in a direction parallel to the main axis. Alternatively, the set screw can be perpendicular to the main axis of the guide rail, so as to push a cam which transforms the translation of the set screw perpendicular to the main axis into a motion of the sensor body parallel to the main axis.

According to one embodiment, the sensor body bears against a wall of the sensor cavity. The wall is preferably perpendicular to the main axis and faces away from the guide rail. According to another embodiment, the sensor body bears against the end of the guide rail. More specifically, the sensor body preferably bears against an end face of the end portion of the guide rail, perpendicular to the main axis.

Advantageously, the sensor housing securing means can comprise at least one clamping screw extending through a clamping screw hole, preferably in a direction perpendicular to the main axis, the clamping screw bearing against a clamping zone of the guide rail. The clamping zone of the guide rails are preferably lateral surfaces of the end portion of the guide rail, which do not require extra machining of the end portion of the guide rail.

According to another embodiment, the sensor housing securing means comprise at least one fixing screw extending through a fixing screw hole, preferably in a direction parallel to the main axis, the fixing screw being screwed into a threaded hole at the axial end of the guide rail

According to a preferred embodiment, the sensor housing is monobloc.

Preferably, the photosensitive sensor comprises a photoelectric transducer, preferably a photodiode or an avalanche photodiode (APD). The photosensitive sensor may also comprise a transmittance amplifier (TIA) and/or a signal pre-processing unit. Alternative passive or active photoelectric transducers can be used, e.g. CCD elements, silicon detectors, etc., as is well known in the art. According to a preferred embodiment, the light signal emitted by the photoluminescent fibre is primarily a binary signal, in which case the photoelectric transducer does not need to provide a precise measure of the intensity of the signal, or if a precise measure is available, it may be used for noise reduction. The photoelectric transducer is preferably connected to a transimpedance amplifier to improve the immunity to electromagnetic interference and to a band pass filter to remove useless signal.

Advantageously, a lens between the photoelectric transducer and the end of the photoluminescent optical fibre, the lens being preferably integrated with the photoelectric transducer.

According to an embodiment, the end of the photoluminescent optical fibre protrudes from the end of the guide rail into the sensor housing and the sensor housing comprises a channel for receiving the end of the photoluminescent optical fibre.

Alternatively, the end of the photoluminescent optical fibre is flush with or in a recessed position relative to the end of the guide rail.

In practice, the instrumented linear motion device further comprises a carriage guided by the guideway along a linear path, the carriage being provided with a light source for transversally illuminating the photoluminescent optical fibre.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- figure 1 is an isometric view of a part of an instrumented linear motion device according to one embodiment of the invention;
- figure 2 is a schematic cross-section through a guide rail and a carriage of the instrumented linear motion device of figure 1;
- figure 3 is an exploded view of and end portion of the guide rail and of a sensor housing of the instrumented linear motion device of figure 1;
- figure 4 is a side view of the end portion of the guide rail and of the sensor housing of the instrumented linear motion device of figure 1;
- figure 5 is a cross-section of the end portion of the guide rail and of the sensor housing through the section plane A-A of figure 4;
- figure 6 is a longitudinal section of the end portion of the guide rail and of the sensor housing through the section plane B-B of figure 4;
- figure 7 is a side view of the end portion of the guide rail and of the sensor housing of an alternative embodiment of the invention;
- figure 8 is a cross-section of the end portion of the guide rail and of the sensor housing through the section plane A-A of figure 7;
figure 9 is a longitudinal section of the end portion of the guide rail and of the sensor housing through the section plane B-B of figure 7.

Identical reference numbers will be used in different figures for identifying identical parts of the same embodiments or similar parts of different embodiments.

### DETAILED DESCRIPTION OF PREFERRED EMBODIMENTS

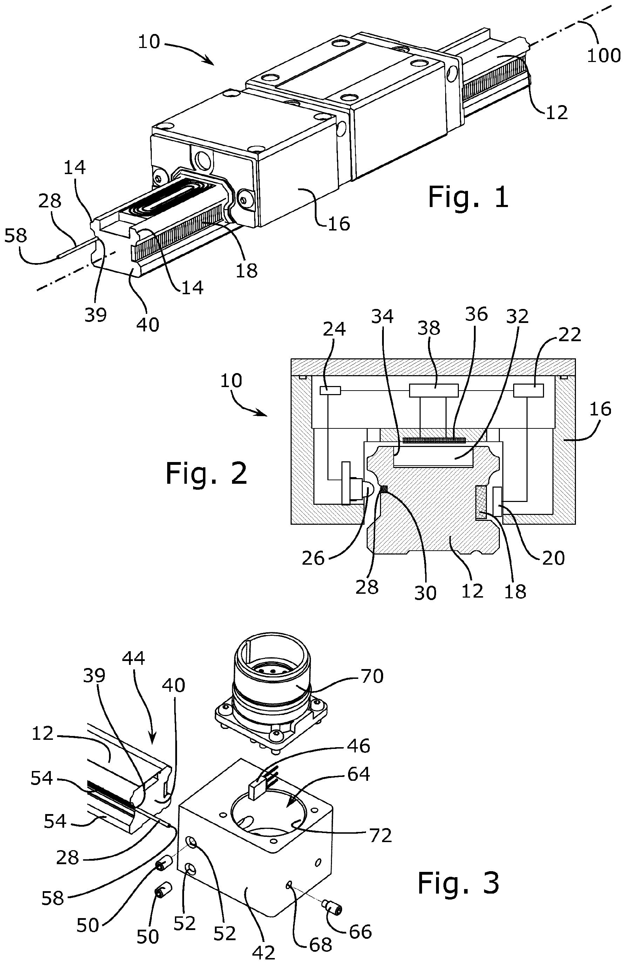

With reference to Figure **1**, an instrumented linear motion device **10** comprises a guide rail **12**, which defines a main axis **100** of the instrumented linear motion device. The guide rail **12** is provided with one or more guideways **14** for guiding a fore and aft motion of a carriage **16** along a rectilinear path parallel to the main axis **100**. The carriage **16** may roll or slide on the guideways **14** as is well known in the art and can be moved by any known means, e.g. a worm drive, rack and pinion drive or an endless belt drive (not shown).

As illustrated in Figure **2**, a position encoder **18** is arranged along the guide rail **12**. A position sensor **20** fixed to the carriage **16** faces the encoder **18** to read the position of the carriage **16** with respect to the guide rail **12**. The position encoder **18** can be a magnetic encoder including one or more strips having a succession of magnetised segments with alternate polarisation directions. It can also be a single rack of ferromagnetic material, with a succession of teeth and recesses detected by the distance sensor. The encoder **18** may also be an optical encoder having graduations read remotely by the sensor.

The signal produced by the position sensor **20** is subject to a treatment in a signal conditioning circuit **22** connected to a control circuit **24** of an excitation light source **26**, for example a light-emitting diode, which faces a photoluminescent optical fibre **28** disposed in a groove **30** of the guide rail **12** parallel to the main axis **100**. The photoluminescent optical fibre **28** is doped with fluorescent pigments with a constant density.

The conditioning circuit **22** and the control circuit **24** on the carriage **16** are powered by a wireless power transmission device, which comprises a primary winding **32** arranged in a groove **34** of the guide rail **12** and a secondary winding **36** secured to the carriage **16**. The secondary winding **36** faces the primary winding **32**. The relative position of the secondary winding **36** and primary winding **32** is such that regardless of the positioning of the carriage **16** on the guide rail **12**, a primary current flowing through the primary winding **32** induces a secondary current in the secondary winding **36**, which feeds through a power supply unit **38** the signal conditioning circuit **24** and the control circuit **24**.

The linear groove **30** has an open end **39** opened at the axial end **40** of the guide rail **12** and the instrumented linear motion device **10** further comprises a monobloc sensor housing **42** fixed to an end portion **44** of the guide rail **12**, and in which a photosensitive sensor **46** is received.

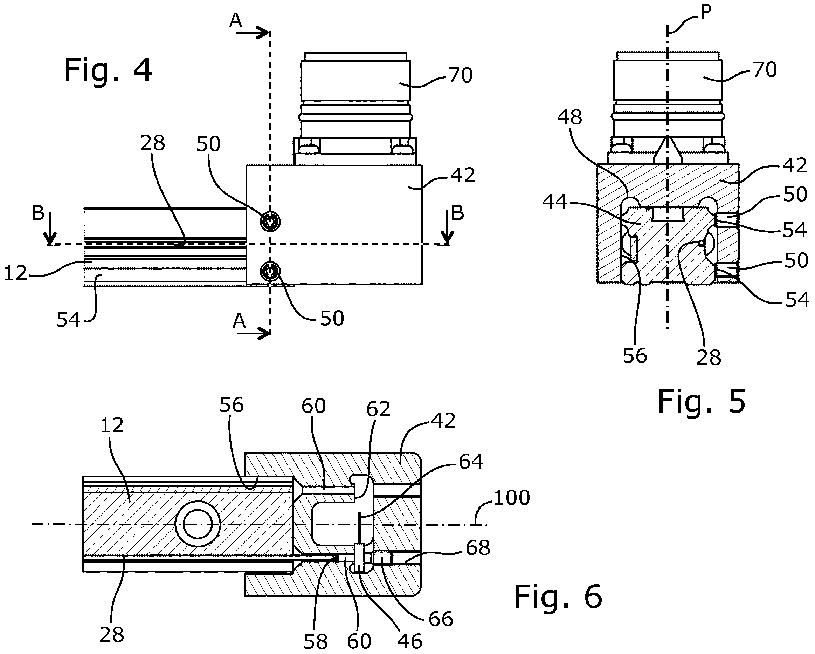

More specifically and with reference to figures **3** to **6**, the sensor housing **42** comprises a U-shaped insertion cavity **48** in which the end portion **44** of the guide rail **12** is received. Two clamping screws **50** extend through clamping holes **52** provided in the sensor housing **42** in a direction perpendicular to the main axis **100**, and bear against a side wall **54** of the end portion **44** of the guide rail **12** to push the end portion **44** of the guide rail **12** transversally against the opposite side wall **56** of the insertion cavity **48** and clamp the sensor housing **42** to the end portion **44** of the guide rail **12**.

The end **58** of the photoluminescent optical fibre **28** protrudes from the end **40** of the guide rail **12** into the sensor housing **42**, which is provided with a groove or tubular channel **60** for receiving the end **58** of the photoluminescent optical fibre **28**. The channel **60** opens onto a partition wall **62** of a sensor cavity **64** within the sensor housing. The photosensitive sensor **46** is received in the sensor cavity **64** of the sensor housing **42** and is clamped in position between the partition wall **62** and a set screw **66**, which extends through a threaded hole **68** of the sensor housing **42**, parallel to the main axis **100** of the guide rail **12** and perpendicular to the partition wall **62**. The set screw **66** can be unscrewed to release the pressure on the photosensitive sensor **42** and allow a lateral adjustment of the sensor **42** parallel to the partition wall **62** so that the sensor **42** faces the channel **60**.

The photosensitive sensor **46** comprises a photoelectric transducer, preferably a photodiode, a lens integrated with the photoelectric transducer, between the photoelectric transducer and the end **58** of the photoluminescent optical fibre **28** and a signal pre-processing unit.

The photosensitive sensor **46** is connected to a rugged sealed connector, e.g. a standard M23 front mount flanged female connector **70**, which closes an access opening **72** to the sensor cavity **64**. The access opening **72** is used to inserting the photosensitive sensor **46** in the sensor cavity **64** perpendicularly to the main axis **100**.

The inner cavities of the sensor housing **42** have a plane of symmetry P, as well as the outer envelope of end portion **44** of the guide rail **12**. As a result, the sensor housing **42** can be fixed to both ends of the guide rail and the position of the photosentive sensor **46** in the sensor cavity **44** has to be changed to face the corresponding channel **60** of the sensor housing **42**.

The system operates as follows. When the carriage **16** moves on the guide rail **12**, the position information is read by the position sensor **20**, conditioned by the conditioning circuit **22** and transmitted to the control circuit **24** which controls the light source **26** to generate a digital light signal, which illuminates a portion of the optical fibre **28**.

The incident radial light signal from the light source **26** enters the optical fibre **28** where it excites the fluorescent pigments within the fibre. More specifically, some of the photons that enter the fibre are absorbed by fluorescent pigments, which pass through an electronically excited state and then quickly emit a photon when returning to their ground state. The emitted photons move along the photoluminescent optical fibre **28** and reach the photosensitive sensor **46**. The preprocessing unit amplifies and processes the signal of the photosensitive sensor **46** and delivers an output signal available via the connector **70**.

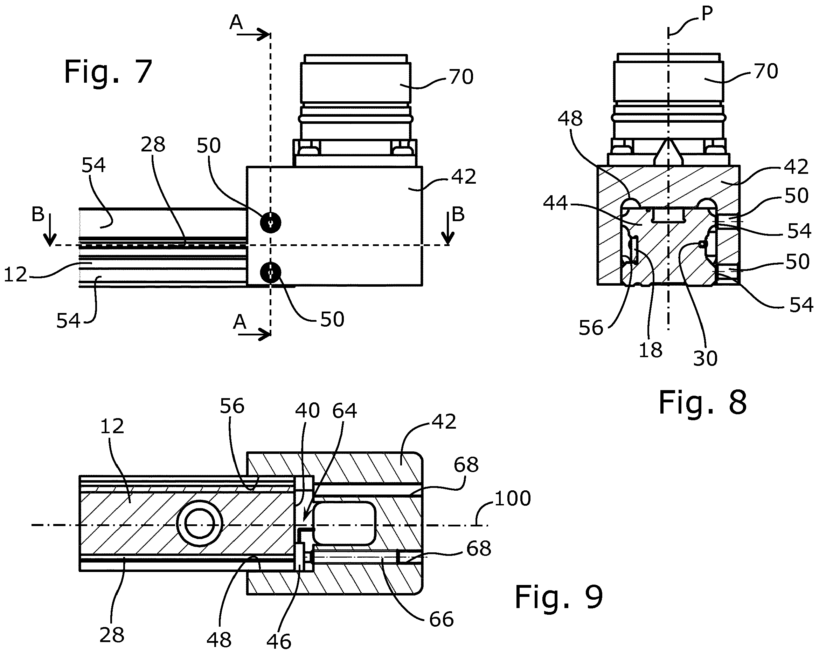

The sensor housing of figures **7** to **9** differs from the housing of figures **3** to **6** in that the end **58** of the photoluminescent optical fibre **28** is flush with or in a recessed position relative to the end **40** of the guide rail **12**, such that no channel **60** is necessary. Accordingly, the body of the photosensitive sensor **46** bears directly against the end wall **40** of the guide rail **12**.

While the above example illustrates a preferred embodiment of the present invention it is noted that various other arrangements can also be considered. The clamping means may include an elastic fastener, e.g. a circlip engaged in a recess provided in a lateral wall of the end portion of the guide rail.

The sensor housing can be fixed to the end portion of the guide rail with one or several fixing screws extending through fixing screw holes of the sensor housing, preferably in a direction parallel to the main axis, the fixing screws being screwed into a threaded hole at the axial end of the guide rail.

The set screw **66** can extend in a direction perpendicular to the main axis 100 and bear against a cam element, which transforms the motion of the set screw in the direction perpendicular to the main axis into a motion of the sensor body parallel to the main axis.

The power supply on the carriage can be provided by any suitable means, e.g. a battery on the carriage or a cable connection to a stationary power supply.

## Claims

1. An instrumented linear motion device (10) comprising:
- a guide rail (12) defining a main axis (100) of the instrumented linear motion device (10), the guide rail (12) having an end portion (44) comprising an axial end (40) of the guide rail (12), the guide rail (12) being provided with a guideway (14) for guiding a carriage (16) along a linear path parallel to the main axis (100), the guide rail (12) being provided with a linear groove (30) parallel to the main axis (100),
- a photoluminescent optical fibre (28) received in the linear groove (30), the photoluminescent optical fibre (28) having an end (58); and
- a photosensitive sensor (46) facing the end (58) of the photoluminescent optical fibre (28);
**characterised in that** the linear groove (30) has an open end (39) opened at the axial end (40) of the guide rail (12) and the instrumented linear motion device (10) further comprises a sensor housing (42) fixed to the end portion (44) of the guide rail (12) in a releasable manner by means of securing means (50, 52), the photosensitive sensor (46) being received within a sensor cavity (64) of the sensor housing (42).

2. The instrumented linear motion device of claim 1, wherein the end portion (44) of the guide rail (12) is received in an insertion cavity (56) of the sensor housing (42).

3. The instrumented linear motion device of any one of the foregoing claims, wherein the sensor housing (42) has an access opening (72) extending at an angle or perpendicularly to the main axis (100) for inserting the photosensitive sensor (46) in the sensor cavity (64).

4. The instrumented linear motion device of claim 1, further provided with sensor securing means (66, 68) for releasably securing the photosensitive sensor (46) relative to the sensor housing (42) or to the guide rail (12).

5. The instrumented linear motion device of claim 4, wherein the sensor securing means (66, 68) comprise a set element (66), preferably a set screw extending through a threaded set hole (68) of the sensor housing (42), the set element (66) pushing a sensor body of the photosensitive sensor (46) towards the end (58) of the photoluminescent optical fibre (28).

6. The instrumented linear motion device of claim 5, wherein the sensor body bears against a wall (62) of the sensor cavity (64).

7. The instrumented linear motion device of claim 5, wherein the sensor body bears against the end (44) of the guide rail (12).

8. The instrumented linear motion device of any one of the claims 1 to 7, wherein the sensor housing securing means (50, 52) comprise at least one clamping screw (50) extending through a clamping screw hole (52), preferably in a direction perpendicular to the main axis (100), the clamping screw (50) bearing against a clamping zone (54) of the guide rail (12).

9. The instrumented linear motion device of any one of the claims 1 to 7, wherein the sensor housing securing means (50, 52) comprise at least one fixing screw extending through a fixing screw hole (52), preferably in a direction parallel to the main axis (100), the fixing screw (50) being screwed into a threaded hole at the axial end (40) of the guide rail (12).

10. The instrumented linear motion device of any one of the foregoing claims, wherein the sensor housing (42) is monobloc.

11. The instrumented linear motion device of any one of the foregoing claims, wherein the photosensitive sensor (46) comprises a photoelectric transducer, preferably a photodiode or an avalanche photodiode.

12. The instrumented linear motion device of claim 11, wherein the photosensitive sensor further comprises a transimpedance amplifier and/or a signal pre-processing unit.

13. The instrumented linear motion device of any one of the foregoing claims, wherein the end (58) of the photoluminescent optical fibre (28) protrudes from the end (40) of the guide rail (12) into the sensor housing (42) and the sensor housing (42) comprises a channel (60) for receiving the end (58) of the photoluminescent optical fibre (28).

14. The instrumented linear motion device of any one of claims 1 to 12, wherein the end (58) of the photoluminescent optical fibre (28) is flush with or in a recessed position relative to the end (40) of the guide rail (12).

15. The instrumented linear motion device of any one of the foregoing claims, further comprising a carriage (16) guided by the guideway (14) along a linear path, the carriage (16) being provided with a light source (26) for transversally illuminating the photoluminescent optical fibre (28).

## Patentansprüche

1. Instrumentierte, lineare Bewegungsvorrichtung (10), umfassend:
- eine Führungsschiene (12), die eine Hauptachse (100) der instrumentierten, linearen Bewegungsvorrichtung (10) definiert, wobei die Führungsschiene (12) einen Endabschnitt (44) aufweist, umfassend ein axiales Ende (40) der Führungsschiene (12), wobei die Führungsschiene (12) mit einem Führungsweg (14) zum Führen einer Last (16) entlang einem linearen Pfad parallel zur Hauptachse (100) bereitgestellt ist, wobei die Führungsschiene (12) mit einer linearen Nut (30) parallel zur Hauptachse (100) bereitgestellt ist,
- eine Photolumineszenz-Glasfaser (28), die in der linearen Nut (30) aufgenommen ist, wobei die Photolumineszenz-Glasfaser (28) ein Ende (58) aufweist; und
- einen photosensitiven Sensor (46), der dem Ende (58) der Photolumineszenz-Glasfaser (28) gegenüberliegt;
**dadurch gekennzeichnet, dass** die lineare Nut (30) ein offenes Ende (39) aufweist, das an dem axialen Ende (40) der Führungsschiene (12) geöffnet ist, und die instrumentierte, lineare Bewegungsvorrichtung (10) weiterhin ein Sensorgehäuse (42) umfasst, das an dem Endabschnitt (44) der Führungsschiene (12) auf lösbare Weise mittel Sicherungsmitteln (50, 52) befestigt ist, wobei der photosensitive Sensor (46) innerhalb einer Sensorausnehmung (64) des Sensorgehäuses (42) aufgenommen ist.

2. Instrumentierte, lineare Bewegungsvorrichtung gemäß Anspruch 1, wobei der Endabschnitt (44) der Führungsschiene (12) in einer Einfügeausnehmung (56) des Sensorgehäuses (42) aufgenommen ist.

3. Instrumentierte, lineare Bewegungsvorrichtung gemäß irgendeinem der voranstehenden Ansprüche, wobei das Sensorgehäuse (42) eine Zugriffsöffnung (72) aufweist, die sich in einem Winkel oder lotrecht zur Hauptachse (100) zum Einfügen des photosensitiven Sensors (46) in die Sensorausnehmung (64) erstreckt.

4. Instrumentierte, lineare Bewegungsvorrichtung gemäß Anspruch 1, die weiterhin mit Sensorsicherungsmitteln (66, 68) zum lösbaren Sichern des photosensitiven Sensors (46) relativ zum Sensorgehäuse (42) oder zur Führungsschiene (12) bereitgestellt ist.

5. Instrumentierte, lineare Bewegungsvorrichtung gemäß Anspruch 4, wobei das Sensorsicherungsmittel (66, 68) ein Feststellelement (66), bevorzugt eine Feststellschraube, die sich durch ein Feststellloch (68) mit Gewinde des Sensorgehäuses (42) erstreckt, wobei das Feststellelement (66) einen Sensorkörper des photosensitiven Sensors (46) zu dem Ende (58) der Photolumineszenz-Glasfaser (28) schiebt, umfasst.

6. Instrumentierte, lineare Bewegungsvorrichtung gemäß Anspruch 5, wobei der Sensorkörper gegen eine Wand (62) der Sensorausnehmung (64) drückt.

7. Instrumentierte, lineare Bewegungsvorrichtung gemäß Anspruch 5, wobei der Sensorkörper gegen das Ende (44) der Führungsschiene (12) drückt.

8. Instrumentierte, lineare Bewegungsvorrichtung gemäß irgendeinem der Ansprüche 1 bis 7, wobei das Sensorgehäuse-Sicherungsmittel (50, 52) wenigstens eine Klemmschraube (50) umfasst, die sich durch ein Klemmschraubenloch (52), bevorzugt in einer Richtung erstreckt, die zur Hauptachse (100) lotrecht ist, wobei die Klemmschraube (50) gegen einen Klemmbereich (54) der Führungsschiene (12) drückt.

9. Instrumentierte, lineare Bewegungsvorrichtung gemäß irgendeinem der Ansprüche 1 bis 7, wobei das Sensorgehäuse-Sicherungsmittel (50, 52) wenigstens eine Befestigungsschraube umfasst, die sich durch ein Befestigungsschraubenloch (52) bevorzugt in einer Richtung erstreckt, die parallel zur Hauptachse (100) ist, wobei die Befestigungsschraube (50) in ein Gewindeloch am axialen Ende (40) der Führungsschiene (12) geschraubt ist.

10. Instrumentierte, lineare Bewegungsvorrichtung gemäß irgendeinem der voranstehenden Ansprüche, wobei das Sensorgehäuse (42) ein Monoblock ist.

11. Instrumentierte, lineare Bewegungvorrichtung gemäß irgendeinem der voranstehenden Ansprüche, wobei der photosensitive Sensor (46) einen photoelektrischen Umformer, bevorzugt eine Photodiode oder eine Avalanche-Photodiode umfasst.

12. Instrumentierte, lineare Bewegungsvorrichtung gemäß Anspruch 11, wobei der photosensitive Sensor weiterhin einen Transimpedanz-Verstärker und / oder eine Signal-Vorverarbeitungseinheit umfasst.

13. Instrumentierte, lineare Bewegungsvorrichtung gemäß irgendeinem der voranstehenden Ansprüche, wobei das Ende (58) der Photolumineszenz-Glasfaser (28) aus dem Ende (40) der Führungsschiene (12) in das Sensorgehäuse (42) hervorsteht und das Sensorgehäuse (42) einen Kanal (60) zum Empfangen des Endes (58) der Photolumineszenz-Glasfaser (28) umfasst.

14. Instrumentierte, lineare Bewegungsvorrichtung gemäß irgendeinem der Ansprüche 1 bis 12, wobei das Ende (58) der Photolumineszenz-Glasfaser (28) bündig mit oder in einer zurückgesetzten Position relativ zu dem Ende (40) der Führungsschiene (12) ist.

15. Instrumentierte, lineare Bewegungsvorrichtung gemäß irgendeinem der voranstehenden Ansprüche, weiterhin umfassend eine Ladung (16), die durch den Führungsweg (14) entlang einem linearen Pfad geführt ist, wobei die Ladung (16) mit einer Lichtquelle (26) zum transversalen Beleuchten der Photolumineszenz-Glasfaser (28) bereitgestellt ist.

## Revendications

1. Dispositif à mouvement linéaire instrumenté (10) comprenant :
- un rail de guidage (12) définissant un axe principal (100) du dispositif à mouvement linéaire instrumenté (10), le rail de guidage (12) présentant une portion d'extrémité (44) comprenant une extrémité axiale (40) du rail de guidage (12), ledit rail de guidage (12) étant muni d'une glissière (14) permettant de guider un chariot (16) le long d'un chemin linéaire parallèle à l'axe principal (100), ledit rail de guidage (12) étant muni d'une rainure linéaire (30) parallèle à l'axe principal (100),
- une fibre optique photoluminescente (28) reçue dans la rainure linéaire (30), ladite fibre optique photoluminescente (28) possédant une extrémité (58) ; et
- un capteur photosensible (46) qui se trouve en regard de l'extrémité (58) de la fibre optique photoluminescente (28) ;
**caractérisé en ce que** la rainure linéaire (30) présente une extrémité ouverte (39) qui s'ouvre au niveau de l'extrémité axiale (40) du rail de guidage (12) et le dispositif à mouvement linéaire instrumenté (10) comprend en outre un logement de capteur (42) attaché à la portion d'extrémité (44) du rail de guidage (12) de manière détachable au moyen de moyens de fixation (50, 52), ledit capteur photosensible (46) étant reçu à l'intérieur d'une cavité de capteur (64) du logement de capteur (42).

2. Dispositif à mouvement linéaire instrumenté selon la revendication 1, dans lequel la portion d'extrémité (44) du rail de guidage (12) est reçue dans une cavité d'insertion (56) du logement de capteur (42).

3. Dispositif à mouvement linéaire instrumenté selon l'une quelconque des revendications précédentes, dans lequel le logement de capteur (42) possède une ouverture d'accès (72) qui s'étend suivant un angle, ou perpendiculairement, par rapport à l'axe principal (100) pour l'insertion du capteur photosensible (46)) dans la cavité de capteur (64).

4. Dispositif à mouvement linéaire instrumenté selon la revendication 1, muni en outre de moyens de fixation du capteur (66, 68) destinés à fixer, de manière détachable, le capteur photosensible (46) par rapport au logement de capteur (42) ou au rail de guidage (12).

5. Dispositif à mouvement linéaire instrumenté selon la revendication 4, dans lequel les moyens de fixation du capteur (66, 68) comprennent un élément de réglage (66), de préférence une vis de réglage qui s'étend à travers un orifice de réglage fileté (68) du logement de capteur (42), l'élément de réglage (66) poussant un corps de capteur du capteur photosensible (46) vers l'extrémité (58) de la fibre optique photoluminescente (28).

6. Dispositif à mouvement linéaire instrumenté selon la revendication 5, dans lequel le corps du capteur appuie contre une paroi (62) de la cavité de capteur (64).

7. Dispositif à mouvement linéaire instrumenté selon la revendication 5, dans lequel le corps du capteur appuie contre l'extrémité (44) du rail de guidage (12).

8. Dispositif à mouvement linéaire instrumenté selon l'une quelconque des revendications 1 à 7, dans lequel les moyens de fixation du logement du capteur (50, 52) comprennent au moins une vis de serrage (50) qui s'étend à travers un orifice de vis de serrage (52), de préférence dans une direction perpendiculaire à l'axe principal (100), ladite vis de serrage (50) appuyant contre une zone de serrage (54) du rail de guidage (12).

9. Dispositif à mouvement linéaire instrumenté selon l'une quelconque des revendications 1 à 7, dans lequel les moyens de fixation du logement du capteur (50, 52) comprennent au moins une vis d'attache qui s'étend à travers un orifice de vis d'attache (52), de préférence dans une direction parallèle à l'axe principal (100), la vis d'attache (50) étant vissée dans un orifice fileté au niveau de l'extrémité axiale (40) du rail de guidage (12).

10. Dispositif à mouvement linéaire instrumenté selon l'une quelconque des revendications précédentes, dans lequel le logement de capteur (42) est monobloc.

11. Dispositif à mouvement linéaire instrumenté selon l'une quelconque des revendications précédentes, dans lequel le capteur photosensible (46) comprend un transducteur photoélectrique, de préférence une photodiode ou une photodiode à avalanche.

12. Dispositif à mouvement linéaire instrumenté selon la revendication 11, dans lequel le capteur photosensible comprend en outre un amplificateur de transimpédance et/ou une unité de prétraitement de signal.

13. Dispositif à mouvement linéaire instrumenté selon l'une quelconque des revendications précédentes, dans lequel l'extrémité (58) de la fibre optique photoluminescente (28) fait saillie à partir de l'extrémité (40) du rail de guidage (12) dans le logement du capteur (42) et le logement du capteur (42) comprend un canal (60) destiné à recevoir l'extrémité (58) de la fibre optique photoluminescente (28).

14. Dispositif à mouvement linéaire instrumenté selon l'une quelconque des revendications 1 à 12, dans lequel l'extrémité (58) de la fibre optique photoluminescente (28) affleure, ou se trouve en position de retrait par rapport à l'extrémité (40) du rail de guidage (12).

15. Dispositif à mouvement linéaire instrumenté selon l'une quelconque des revendications précédentes, comprenant en outre un chariot (16) guidé par la glissière (14) le long d'un chemin linéaire, le chariot (16) étant muni d'une source de lumière (26) afin d'éclairer transversalement la fibre optique photoluminescente (28).
